(19) **Europäisches Patentamt / European Patent Office / Office européen des brevets**

(11) **EP 4 520 738 A1**

(12) # EUROPEAN PATENT APPLICATION

(43) Date of publication:
**12.03.2025 Bulletin 2025/11**

(21) Application number: **24188447.7**

(22) Date of filing: **12.07.2024**

(51) International Patent Classification (IPC):
***C04B 26/26*** (2006.01)

(52) Cooperative Patent Classification (CPC):
(C-Sets available)
**C04B 26/26; C04B 28/02;** C04B 2111/0075
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 PT 2023118815**

(71) Applicants:
• **Domingos Da Silva Teixeira, S.A.**
4700-727 Braga (PT)
• **Universidade do Minho**
4704-553 Braga (PT)
• **CVR - Centro Para a Valorização de Resíduos**
4800-042 Guimarães (PT)

(72) Inventors:
• **MESQUITA RODRIGUES, MAFALDA MARGARIDA**
4470-273 MAIA (PT)

• **CASTRO DE OLIVEIRA, JACINTO MANUEL**
4805-414 GUIMARÃES (PT)
• **NOGUEIRA DA COSTA, JOSÉ MANUEL**
4730-805 VILA VERDE (PT)
• **RIBEIRO DIAS DA SILVA, HUGO MANUEL**
4710-083 BRAGA (PT)
• **MARTINS DE OLIVEIRA, JOEL RICARDO**
4705-267 BRAGA (PT)
• **FERNANDES NUNES DE MOURA, CAROLINE**
4700-383 BRAGA (PT)
• **ALEIXO LOUREIRO, CARLOS DANIEL**
4710-085 BRAGA (PT)
• **PEREIRA DO NASCIMENTO, LUCAS**
4835-016 CREIXOMIL (PT)

(74) Representative: **Patentree**
**Edificio Net**
**Rua de Salazares, 842**
**4149-002 Porto (PT)**

(54) **ASPHALT CONCRETE MIXTURES WITH STEEL SLAG AGGREGATES AND RECLAIMED ASPHALT AND INFRASTRUCTURES MADE THEREOF**

(57) The present disclosure relates to an asphalt concrete mixture comprising: 50% to 75% (w/w) of steel slag aggregates, wherein the size of the steel slag aggregates is up to 20 mm, measured by sieving; 15% to 30% (w/w) of reclaimed asphalt, wherein the size of the of reclaimed asphalt is up to 14 mm, measured by sieving; 10% to 20% (w/w) of natural stone aggregates and/or filler; and 2% to 4% (w/w) of virgin bitumen. Infrastructures comprising the described asphalt concrete mixture are also disclosed.

EP 4 520 738 A1

(52)  Cooperative Patent Classification (CPC): (Cont.)

C-Sets
**C04B 26/26, C04B 14/14, C04B 14/28,
C04B 14/048, C04B 18/16, C04B 18/142,
C04B 20/0076;
C04B 28/02, C04B 14/14, C04B 14/28,
C04B 14/048, C04B 18/16, C04B 18/142,
C04B 20/0076, C04B 22/064, C04B 24/36**

**Description**

**TECHNICAL FIELD**

The present disclosure relates to asphalt concrete mixtures for surface, binder and regulating courses (AC 14 surf/bin/reg) and binder/base courses (AC 20 bin/base), incorporating high amounts of steel slag aggregates (SSA) and reclaimed asphalt (RA).

**BACKGROUND**

The steel industry, particularly the steel producer, generates significant amounts of waste, including slag, commonly known as "steel slag". It is a granular material with a high micro-porosity, very high density, around 3.5 Mg/m$^3$, an angular shape, and excellent wear resistance that can be used as aggregates in asphalt concrete mixtures [1].

Using steel slag to substitute aggregates in asphalt concrete mixtures to produce a high-performance mixture has gained significant interest recently as a value-added option to recycle steel slag [2]. This slag has excellent properties for asphalt concrete mixtures, being especially suitable for surface courses where skid resistance and durability are critical functional requirements and for producing asphalt mixtures subjected to heavy traffic [3-5]. Some previous research has shown that using this material improves the mechanical properties of asphalt mixtures, like durability, workability, stiffness, permeability, stability, resistance to fatigue, and permanent deformation [6-11].

However, the geometric characteristic of steel slag causes an increase in the air voids of the asphalt mixture or implies the use of higher amounts of added bitumen. In traditional asphalt mixture design, the air voids content is the most important volumetric property because it can affect the performance of the mixture [12]. It has been widely recognised that the bearing capacity and durability of asphalt pavement strongly depends on the density or air void content of the asphalt mixture. Too high or too low densities may cause early distresses in the asphalt pavement [13]. Thus, the use of steel slag in the asphalt mix should be limited to partial replacement of natural aggregates because the asphalt mix with 100% steel slag is highly susceptible to bulking and air voids problems because of its angular shape [14].

Existing asphalt pavement materials are milled during resurfacing, rehabilitation, or reconstruction operations. Once removed and processed, the pavement material becomes reclaimed asphalt (RA), consisting of valuable non-renewable resources, i.e., approximately 95% wt. of aggregates and 5% wt. of an aged asphalt binder. It can be reused in new asphalt mixtures, reducing the demand for virgin aggregates and bitumen [14].

Previous research has shown that using RA can improve basic properties such as resilient modulus, susceptibility to moisture, permanent deformation, and fatigue [15]. According to Abdel-Jaber *et al.* [16], the permanent deformation, considered one of the critical properties of asphalt mixtures, has been reduced as the percentage of RA content in the mixtures increased, which in turn means higher rutting resistance.

In addition to the advantages related to the mechanical performance of the asphalt mixtures, incorporating SSA and RA in the pavements reduces the volume of these materials deposited in landfills and the demand for virgin aggregates and bitumen, promoting a circular economy.

Document CN104926233 discloses a high RA content asphalt mixture comprising (percentage by weight) 40-65% of milled waste material (RA), 30-50% of aggregates, 1.5% of mineral powder, 1.5% of ordinary Portland cement, 0.3% of polyester fibre or basalt fibre, 2.8-3.9% of substrate asphalt. Steel slag is also part of the asphalt mixture, but in a low concentration.

Document CN113511842 describes a thermal regeneration steel slag asphalt mixture comprising: 6-24 parts of steel slag, 27-29 parts of old asphalt mixture, 3.9-4.5 parts of asphalt, 42-60 parts of basalt and 5.4-5.6 parts of mineral powder, wherein the optimal asphalt-aggregates ratio is 3.9-4.5%. The resulting thermal regeneration steel slag asphalt mixture test piece has characteristics of good high temperature stability, good low temperature crack resistance and good water stability. However, the amount of steel slag is below the amount of reclaimed asphalt, thus not being the main component of the mixture.

These facts are disclosed in order to illustrate the technical problem addressed by the present disclosure.

**GENERAL DESCRIPTION**

The present disclosure relates to an asphalt concrete mixture for surface, binder and regulating courses (AC 14 surf/bin/reg) and binder/base courses (AC 20 bin/base), incorporating high amounts of steel slag aggregates (SSA) and reclaimed asphalt (RA). These wastes replace most of the natural aggregates and part of the virgin asphalt binder to produce asphalt mixtures with better mechanical performance, lower dependence on petroleum-based resources, and a significant reduction in $CO_2$ emission (48% for AC 14 surf/bin/reg and 49% for AC 20 bin/base). Using waste materials reduces the amount of material sent to overcrowded and overused landfill areas.

The practice of recycling reclaimed asphalt (RA) has been limited primarily due to a lack of confidence in the performance of recycled pavement, increased operational complexity, variability of RA material, and uncertainty about the mobilization degree of the aged binder [17,18]. This lack of confidence is linked to high RA content and concerns about the unknown durability of such pavements, which may require more frequent maintenance operations. However, increasing RA incorporation involves additional costs with processing, testing, pollution control, and rejuvenator use [19]. The aged asphalt binder in RA may compromise the performance of the final mixture when high recycling rates are used without rejuvenators. Therefore, in this disclosure, the incorporation of RA is intentionally limited to levels below 30% by weight and the mixtures do not need a rejuvenating agent.

The asphalt concrete mixtures of the present disclosure surprisingly show an improved mechanical performance, by combining two types of waste: steel slag aggregates (SSA, mainly used as coarse aggregates) and reclaimed asphalt (RA, mainly used as fine aggregates and partial substitute of bitumen). Steel slag is a by-product generated as waste during steelmaking and can be a cost-effective and environmentally acceptable alternative to replace natural aggregates. Reclaimed asphalt results from milling/demolition of distressed pavements and contains valuable asphalt binder and high-quality aggregates, thus being a cost-effective pavement construction material. This disclosure defines the adequate combination of steel slag aggregates and RA to produce asphalt concrete mixtures with improved mechanical performance using high amounts of waste (more than 75% of steel slag aggregates and reclaimed asphalt aggregates) as a raw material, in order to achieve the sustainability and circular economy principles that are now one of the main goals of the industry and global economy.

The present disclosure relates to an asphalt concrete mixture, or bituminous concrete mixture, comprising: 50% to 75% (w/w) of steel slag aggregates, wherein the size of the steel slag aggregates is up to 20 mm, measured by sieving; up to 30% (w/w) of reclaimed asphalt, wherein the size of the aggregates of reclaimed asphalt is up to 14 mm, measured by sieving; 3% to 25% (w/w) of natural stone aggregates and/or a filler, preferably 5% to 25% (w/w); up to 4% (w/w) of virgin bitumen.

The disclosed asphalt concrete mixtures of the present disclosure uniquely combining over 75% steel slag aggregates (SSA) and reclaimed asphalt (RA) to significantly enhance mechanical performance, demonstrating an unexpected synergistic effect, thereby addressing the technical challenge of creating high-performance, cost-effective, and environmentally sustainable asphalt concrete that aligns with the principles of circular economy.

An aspect of the present disclosure relates to an asphalt concrete mixture comprising

50% to 65% (w/w) of steel slag aggregates, wherein the size of the steel slag aggregates is up to 20 mm, measured by sieving;
15% to 30% (w/w) of reclaimed asphalt aggregates, wherein the size of the aggregates of reclaimed asphalt is up to 14 mm, measured by sieving;
10% to 20% (w/w) of natural stone aggregates and/or filler;
2% to 4% % (w/w) of virgin bitumen.

The asphalt concrete mixture of the present disclosure surprisingly demonstrate better mechanical performance using a lower percentage of virgin bitumen than conventional mixtures with natural aggregates. The percentage of virgin bitumen was reduced by 30%, significantly saving non-renewable resources. The incorporation of reclaimed asphalt in this disclosure is intentionally limited to levels below 30% by weight, ensuring that the mixtures do not require rejuvenator agents and maintaining the asphalt concrete mixture performance. The asphalt concrete mixture of the present disclosure surprisingly allows a significant reduction in $CO_2$ emissions and promotes sustainability and circular economy principles by utilizing high amounts of waste materials.

In an embodiment for better results, the mass ratio between steel slag aggregates and reclaimed asphalt aggregates ranges from 1.6:1 to 4.3:1; preferably 2.5:1 to 4:1.

In an embodiment for better results, the asphalt concrete mixture comprises, 50% to 65% (w/w) of steel slag aggregates; 15% to 30% (w/w) of reclaimed asphalt aggregates; 10% to 20% (w/w) of natural stone aggregates and/or filler; and 2% to 4% (w/w) of virgin bitumen.

In an embodiment for better results, the asphalt concrete mixture comprises 55% to 65% (w/w) of steel slag aggregates.

In an embodiment for better results, the asphalt concrete mixture of the present disclosure is absent of a rejuvenating agent.

In an embodiment for better results, the asphalt concrete mixture is an asphalt concrete (AC) mixture for surface, binder or regulating courses (surf/bin/reg), or an asphalt concrete mixture for binder or base (bin/base) courses.

For the scope and interpretation of the present disclosure, the term "AC 20" and "AC 14" relates to asphalt concrete (AC) with nominal maximum aggregate size of 20 or 14 mm, respectively.

In an embodiment, an asphalt concrete mixture, or bituminous concrete mixture, is applied in layers of different thicknesses ranging from 4 to 6 cm, preferably 4 to 5 cm, for AC 14 surf/bin/reg mixture. In another embodiment, the asphalt concrete mixture, or bituminous concrete mixture, is applied in layers of different thicknesses ranging from 5 to 12 cm, preferably 6 to 8 cm for AC 20 bin/base mixture.

In an embodiment, the size of the steel slag aggregates ranges from 4-16mm; preferably 10-14 mm, preferably for AC 14 surf/bin/reg mixtures.

In an embodiment, the asphalt concrete mixture comprises 15-20 % (w/w) of reclaimed asphalt aggregates.

In an embodiment, the natural stone aggregates and/or filler for the asphalt concrete mixtures are selected from: limestone, cement, lime, granite, basalt, or mixtures thereof; preferably, the filler can be selected from limestone, cement, lime, or mixtures thereof; preferably, the natural stone aggregates can be selected from limestone, granite, basalt, or mixtures thereof.

In an embodiment, the air void content of the disclosed asphalt concrete mixture ranges from 3% to 5% (v/v); preferably, the air void content ranges from 3.5% to 4.5% (v/v).

In an embodiment, the size of the aggregates of reclaimed asphalt ranges from 4-10 mm.

In an embodiment, the disclosed asphalt concrete mixture comprises 3.0% (w/w) to 3.5% (w/w) of virgin bitumen, preferably a 50/70 bitumen.

In an embodiment, the asphalt concrete mixture comprises 3% (w/w) to 5% (w/w) of filler.

In an embodiment, the asphalt concrete mixture comprises 11% (w/w) to 13% (w/w) of natural stone aggregates.

In an embodiment, the asphalt concrete mixture further comprises at least one additional additive selected from the group consisting of acids, polymers, anti-stripping agents, lime, gilsonite and fibers.

In an embodiment, the sizes of the steel slag aggregates are divided into fractions:14 to 20 mm, 10 to 14 mm, 4 to 10 mm, and up to 4 mm; preferably, the sizes of the steel slag aggregates are divided into three fractions: 14 to 20 mm, 4 to 14 mm, and up to 4 mm.

In an embodiment for better results, up to 20% (w/w) of the steel slag aggregates have a size ranging from 14 mm to 20 mm.

In an embodiment for better results, 31% to 50% (w/w) of the steel slag aggregates have a size ranging from 4 to 14 mm.

In an embodiment for better results and synergistic effect, 18% to 30% (w/w) of the steel slag aggregates have a size ranging from 10 to 14 mm and 13% to 20% (w/w) of the steel slag aggregates have a size ranging from 4 mm to 10 mm.

In an embodiment for better results, 11% to 15% (w/w) of the steel slag aggregates have a size of up to 4 mm.

The present disclosure also relates to an infrastructure comprising the disclosed asphalt concrete mixture.

In an embodiment, the infrastructure is a building, a road, a driveway, or a pavement, such as: road construction, airport runways, driveways, walking paths, cycling paths, bridge decks, industrial or race tracks, among others. These applications benefit from the mechanical performance, durability, and cost-effectiveness of asphalt concrete mixtures of the present disclosure, namely those incorporating reclaimed asphalt (RA) and steel slag aggregates (SSA).

## BRIEF DESCRIPTION OF THE DRAWINGS

The following figures provide preferred embodiments for illustrating the disclosure and should not be seen as limiting the scope of the invention.

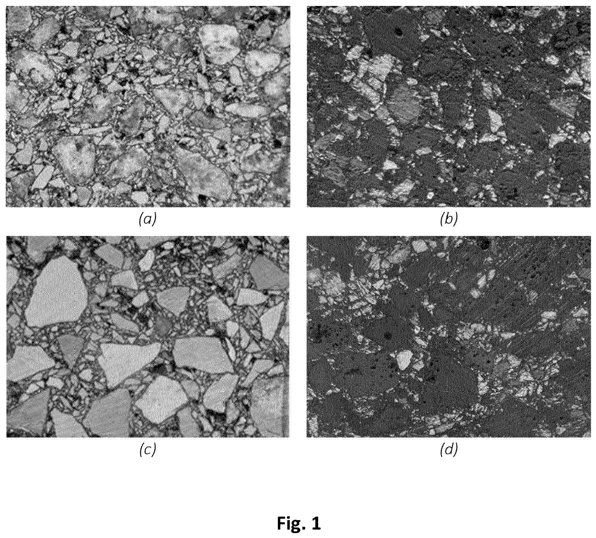

**Figure 1:** Embodiment of a comparison between the cut sections of conventional asphalt mixtures ((a) AC 14 surf/bin/reg with natural aggregates and (c) AC 20 bin/base with natural aggregates) and the disclosed asphalt mixtures ((b) AC 14 surf/bin/reg with SSA and RA and (d) AC 20 bin/base with SSA and RA).

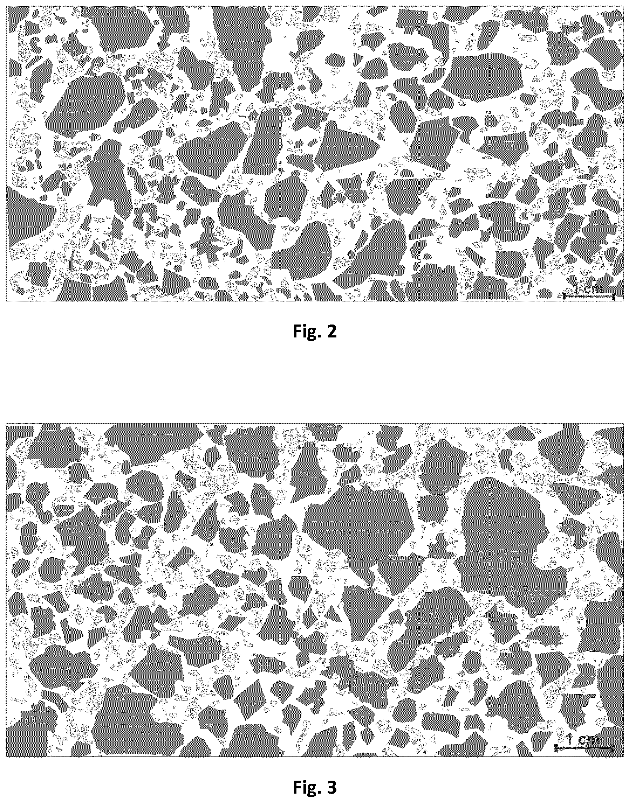

**Figure 2:** Schematic representation of a sample section obtained by digital image overlapping, using AutoCAD and ImageJ, of the AC 14 surf/bin/reg mixture with SSA and RA of the present disclosure. Dark grey - steel slag aggregates (coarse aggregates > 4 mm); Light grey - Limestone aggregates (natural aggregates and from the RA); White - Bitumen, air voids, filler, and fine aggregates (limestone and SSA).

**Figure 3:** Schematic representation of a sample section obtained by digital image overlapping, using AutoCAD and ImageJ, of the AC 20 bin/base mixture with SSA and RA of the present disclosure. Dark grey - steel slag aggregates (coarse aggregates > 4 mm); Light grey - Limestone aggregates (natural aggregates and from the RA); White - Bitumen, air voids, filler, and fine aggregates (limestone and SSA).

## DETAILED DESCRIPTION

The present disclosure relates to an asphalt concrete mixture comprising: 50% to 75% (w/w) of steel slag aggregates, wherein the size of the steel slag aggregates is up to 20 mm, measured by sieving; up to 30% (w/w) of reclaimed asphalt, wherein the size of the of reclaimed asphalt is up to 14 mm, measured by sieving; 3% to 25% (w/w) of natural stone aggregates and/or filler; and up to 4% (w/w) of virgin bitumen. Infrastructures comprising the described asphalt concrete mixture are also disclosed.

In an embodiment, the present disclosure relates to asphalt concrete mixtures for surface, binder, or regulating courses (AC 14 surf/bin/reg) and binder or base courses (AC 20 bin/base), wherein the mixture comprises 50% to 75% (w/w) of SSA, preferably 50% to 65% (w/w) of SSA, up to 30% (w/w) of RA, preferably 15% to 30% (w/w) of RA, 3% to 25% (w/w) of natural aggregates and/or filler, preferably 10% to 20% (w/w) of natural aggregates and/or filler, and up to 4% (w/w) of virgin bitumen, preferably 2% to 4% (w/w) of virgin bitumen. In an embodiment, the resulting mixtures show better mechanical performance using a lower percentage of virgin bitumen incorporation than conventional mixtures with natural aggregates. The percentage of virgin bitumen was reduced by 30%, significantly saving non-renewable resources.

The collective term "aggregates" is used for the mineral materials such as sand, gravel, and crushed stone, used with a binding medium (i.e., bitumen) to form compound materials (such as asphalt concrete). The term aggregates is also used for base and subbase courses for flexible and rigid pavements. Natural aggregates are generally extracted from large rock formations through an open excavation. Extracted rock is typically reduced to usable sizes by mechanical crushing.

In an embodiment, the mechanical performance of the disclosed asphalt concrete mixtures was compared to that of identical conventional mixtures produced with 94% to 96% (w/w) natural aggregates, and 4% to 6% (w/w) virgin bitumen. The results showed that asphalt concrete mixtures of the present disclosure present excellent water sensitivity and rutting resistance, superior to the performance of the conventional asphalt concrete mixtures. The result is even more impressive considering that it was achieved with 80% waste materials and a reduction of 30% in the bitumen added.

Most works with SSA incorporation in asphalt mixtures showed difficulties obtaining adequate values of air void content (Va), typically higher than expected. Due to the physical characteristics of steel slag, namely its angular shape and rough surface, it is not easy to compact the mixtures with this type of material, maintaining Va values within the specified limits. This problem is solved by the asphalt concrete mixture of the present disclosure, which shows Va values according to the regulatory specifications (3.0% to 5.0% (v/v) for AC 14 surf/bin/reg and 3.0% to 6.0% (v/v) for AC 20 bin/base).

In an embodiment, the asphalt concrete mixture comprises SSA, RA, natural aggregates (NA) (e.g., limestone, granite, basalt), filler (e.g., limestone, cement, lime, granite, basalt), and bitumen with penetration grade 50/70. The amount of each material for the mix design of AC 14 and AC 20 mixtures is presented in Table 1 in kg/ton. The size of aggregates was obtained by particle size distribution - sieving method. In an embodiment, the values given in Table 1 have a tolerance of 10% depending on specific designs to consider the variability of the waste materials.

**Table 1** - Mix design of the asphalt concrete mixtures developed in kg/ton.

| Component | Aggregates size | AC 14*** | AC 20**** |
|---|---|---|---|
| SSA 14/20 | 14-20 mm | -- | 190 |
| SSA 10/14 | 10-14 mm | 294 | 190 |
| SSA 4/10 | 4-10 mm | 199 | 137 |
| SSA 0/4 | < 4 mm | 145 | 116 |
| NA 0/4 | < 4 mm | 111 | 127 |
| RA 0/14 | < 14 mm | 172 | 172 |
| Commercial filler* | < 0.125 mm | 25 | -- |
| Recovered filler** | < 0.125 mm | 20 | 37 |
| Bitumen 50/70 | NA | 34 | 31 |

\* Limestone filler
\*\* According to material obtained in the asphalt plant (limestone, granite, basalt, etc)
\*\*\* 64% (w/w) of SSA; 11% (w/w) of NA; and 17% (w/w) of RA
\*\*\*\* 63% (w/w) of SSA; 13% (w/w) of NA; and 17% (w/w) of RA

Figure 1 shows the morphological differences between conventional asphalt mixtures and the disclosed asphalt mixtures. This figure was obtained with a HD digital camera after sawing (with a circular cut-off saw) slabs of asphalt mixtures produced according to the processes presented in this disclosure.

Figure 2 and Figure 3 represent a schematic representation of a sample section of the AC 14 surf/bin/reg mixture and the AC 20 bin/base mixture, respectively, with SSA and RA of the present disclosure. It can be seen that the coarse SSA aggregates (greater than 4 mm), represented in dark grey, account for most of the sample area (approximately 45 to 50% of the total area of the sample for AC 14 surf/bin/reg mixture (Figure 2) and 48 to 53% of the total area of the sample for the AC 20 bin/base mixture (Figure 3)). The light grey aggregates in the drawing are coarse limestone aggregates from the RA and virgin aggregates incorporated into the mixture. The remaining white area represents the fine aggregates (SSA, limestone and RA smaller than 4 mm), bitumen and air voids.

In an embodiment, the volumetric characteristics of the asphalt concrete mixtures were obtained using the maximum theoretical density (MTD) and the bulk density. The bulk density of the samples was obtained by method B of the standard EN 12697-6:2020. The maximum theoretical density (MTD) was determined according to EN 12697-5:2018, using a pycnometer and a disaggregated mixture sample. After determining the bulk density of the specimens and the MTD of each mixture, it is possible to calculate the air voids content (Va) according to Equation 1:

$$V_a = \frac{\rho_m - \rho_b}{\rho_m} \times 100 \tag{1}$$

Where:

$V_a$ is the air voids content of the asphalt specimen, in 0.1 per cent (by volume);
$\rho_m$ is the MTD of the mixture, in megagrams per cubic metre (Mg/m$^3$);
$\rho_b$ is the bulk density of the specimen in megagrams per cubic metre (Mg/m$^3$).

The volumetric characteristics of the asphalt concrete mixtures developed can be seen in Table 2, which shows the average values of each asphalt concrete mixture. The values obtained for Va (%) are considerably lower as compared to the 6% to 7% values presented in the state-of-the-art [4,9], showing that the problem of high air void contents observed in asphalt mixtures with high amounts of SSA is solved by the disclosed asphalt concrete mixtures.

Table 2 - Volumetric characterisation of the asphalt concrete mixtures with SSA and RA.

| Mixture | MTD (kg/m$^3$) | Bulk density (kg/m$^3$) | Va (%) |
|---|---|---|---|
| AC14 | 2884 | 2790 | 3.3% |
| AC20 | 2885 | 2793 | 3.2% |

AC14 - 64% (w/w) SSA and 17% (w/w) of RA
AC20 - 63% (w/w) SSA and 17% (w/w) of RA.

In an embodiment, the asphalt concrete mixtures' mechanical performance was evaluated through water sensitivity and permanent deformation resistance tests. The water sensitivity test was carried out following EN 12697-12:2018 as the preliminary performance control test. It is necessary to store three specimens at room temperature, without conditioning in water, while a second group is conditioned in water for three days at 40 °C. Finally, all the samples are tested by indirect tension at 15 °C (EN 12697-23:2018). The test results are the average indirect tensile strength of the conditioned in water (ITSw) or dry (ITSd) specimens. The indirect tensile strength ratio (ITSR) is the ratio between ITSw and ITSd and is the main parameter used to evaluate water sensitivity. According to current practice, the asphalt mixtures should have ITSR values higher than 70% or, ideally, 80% to ensure adequate performance [20,21].

A comparison between the results obtained for conventional (AC 14 50/70 surf/bin/reg and AC 20 50/70 bin/base) and the disclosed mixtures is present in Table 3. The conventional AC 14 50/70 surf/bin/reg mixture was produced with 92% (w/w) of natural stone aggregates, 3.2% (w/w) of recovered filler and 4.8% (w/w) of bitumen 50/70. The conventional AC 20 50/70 bin/base was produced with 93% (w/w) of natural stone aggregates, 2.6% (w/w) of recovered filler and 4.4% (w/w) of bitumen 50/70. There was an increase of 7.5% in the ITSR for the AC 14 mixture and 1% for the AC 20 mixture, demonstrating the improved durability of the new mixtures in the presence of water. Surprisingly, even with a reduction of 30% in the amount of binder added, the disclosed asphalt concrete mixtures showed excellent ITSR results

Table 3-- Water sensitivity test results of the asphalt concrete mixtures with SSA and RA.

| Asphalt mixture | Indirect tensile strength (kPa) | | ITSR (%) | Increase |
|---|---|---|---|---|
| | ITS$_d$ | ITS$_w$ | | |
| AC 14 - conventional | 2673 | 2480 | 93 | 7.5% |
| AC 14 - SSA and RA of the present disclosure | 3026 | 3036 | 100 | |
| AC 20 - conventional | 2255 | 2183 | 97 | 1.0% |
| AC 20 - SSA and RA of the present disclosure | 3063 | 3014 | 98 | |

AC14 - 64% (w/w) SSA and 17% (w/w) of RA
AC20 - 63% (w/w) SSA and 17% (w/w) of RA.

In an embodiment, the wheel-tracking test (WTT) was used to evaluate the resistance to permanent deformation according to EN 12697-22:2020. Briefly, the method consists of repeatedly passing a wheel over the asphalt mixture at a high operating temperature (60 °C) while measuring the evolution of the wheel rut depth with the number of cycles (up to 10 000 cycles). As for the results obtained in this test, the main parameter is the wheel tracking slope ($WTS_{AIR}$), which indicates the increase in deformation per thousand cycles between the 5000th and the 10000th cycles. The other parameters obtained in this test are the mean proportional rut depth ($PRD_{AIR}$) and the final rut depth ($RD_{AIR}$). The $RD_{AIR}$ is the total deformation after 10000th cycles, while the $PRD_{AIR}$ is the ratio between $RD_{AIR}$ and sample thickness.

A comparison between the conventional and the new mixtures is presented in Tables 4 and 5. The disclosed asphalt concrete mixtures showed an improvement (decrease) of 75% to 77% in the permanent deformation rate ($WTS_{AIR}$) compared to the conventional asphalt mixtures.

**Table 4 -** Wheel tracking test results of the conventional and disclosed asphalt concrete mixtures, in particular AC 14 mixtures.

| Asphalt mixture | $WTS_{AIR}$ (mm/$10^3$ cycles) | $PRD_{AIR}$ (%) | $RD_{AIR}$ (mm) |
|---|---|---|---|
| AC 14 - conventional | 0.24 | 14.0 | 5.4 |
| AC 14 - SSA and RA | 0.06 | 6.1 | 2.4 |
| Improvement | 75% | 56% | 56% |

**Table 5 -** Wheel tracking test results of the conventional and disclosed asphalt concrete mixtures, in particular AC 20 mixtures.

| Asphalt mixture | $WTS_{AIR}$ (mm/$10^3$ cycles) | $PRD_{AIR}$ (%) | $RD_{AIR}$ (mm) |
|---|---|---|---|
| AC 20 - conventional | 0.26 | 10.8 | 6.6 |
| AC 20 - SSA and RA | 0.06 | 4.2 | 2.5 |
| Improvement | 77% | 61% | 62% |

Based on the abovementioned results, the disclosed asphalt concrete mixture differs from previously developed solutions since it shows improved mechanical and environmental performance and volumetric properties that were not previously achieved when using natural, SSA and RA materials. Surprisingly, the asphalt concrete mixtures now disclosed comprise more than 75% (w/w) of waste materials and 30% (w/w) less of added bitumen, which resulted in improved mechanical and environmental performance and volumetric properties. The disclosed mixtures are then the optimum solution after a series of combinations that were not able to meet the expected properties, namely:

Asphalt concrete mixtures with different compositions did not meet the expected results. Table 6 lists the composition of comparative examples which were not able to meet the expected properties. Several examples presented in Table 6 were not able to meet the maximum air voids content limit of 5% (v/v) for AC14 (7.8% (v/v) for Example 2 and 6.4% (v/v) for Example 4) or 6% (v/v) for AC 20 (7.3% (v/v) for Example 1 and 11.6% (v/v) for Example 5). The water sensitivity of some of these compositions, measured as a percentage of strain retain after conditioning the samples in water, was also below the minimum limit value of 80% (77% for Example 1 and 74% for Example 3).

**Table 6** - Comparative examples

| Example | Asphalt mixture | SSA % (w/w) | NA % (w/w) | Bitumen % (w/w) |
|---|---|---|---|---|
| 1 | AC20 | 50 | 45 | 5 |
| 2 | AC14 | 75 | 20 | 5 |
| 3 | AC20 | 75 | 20 | 5 |
| 4 | AC14 | 80 | 15 | 5 |
| 5 | AC20 | 90 | 5 | 5 |

As used in the specification and claims, the singular forms "a", "an" and "the" include plural references unless the context clearly dictates otherwise. For example, the term "a sample" includes a plurality of samples, including mixtures thereof.

Whenever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

**EP 4 520 738 A1**

Furthermore, it is to be understood that the invention encompasses all variations, combinations, and permutations in which one or more limitations, elements, clauses, descriptive terms, etc., from one or more of the claims or from relevant portions of the description is introduced into another claim. For example, any claim that is dependent on another claim can be modified to include one or more limitations found in any other claim that is dependent on the same base claim.

Furthermore, where the claims recite a composition, it is to be understood that methods of using the composition for any of the purposes disclosed herein are included, and methods of making the composition according to any of the methods of making disclosed herein or other methods known in the art are included, unless otherwise indicated or unless it would be evident to one of ordinary skill in the art that a contradiction or inconsistency would arise.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The term "comprising", whenever used in this document is intended to indicate the presence of stated features, integers, steps, or components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

The following reference are incorporate herein by references.

1. Moura, C.; Nascimento, L.; Loureiro, C.; Rodrigues, M.; Oliveira, J.; Silva, H. Viability of Using High Amounts of Steel Slag Aggregates to Improve the Circularity and Performance of Asphalt Mixtures. Applied Sciences 2022, 12, 490.

2. Chen, Z.; Leng, Z.; Jiao, Y.; Xu, F.; Lin, J.; Wang, H.; Cai, J.; Zhu, L.; Zhang, Y.; Feng, N., et al. Innovative use of industrially produced steel slag powders in asphalt mixture to replace mineral fillers. J. Clean. Prod. 2022, 344, 131124.

3. Skaf, M.; Manso, J.M.; Aragón, Á.; Fuente-Alonso, J.A.; Ortega-López, V. EAF slag in asphalt mixes: A brief review of its possible re-use. Resources, Conservation and Recycling 2017, 120, 176-185.

4. Rodríguez-Fernández, I.; Lastra-González, P.; Indacoechea-Vega, I.; Castro-Fresno, D. Technical feasibility for the replacement of high rates of natural aggregates in asphalt mixtures. Int. J. Pavement Eng. 2021, 22, 940-949.

5. Revilla-Cuesta, V.; Ortega-López, V.; Skaf, M.; Pasquini, E.; Pasetto, M. Preliminary Validation of Steel Slag-Aggregate Concrete for Rigid Pavements: A Full-Scale Study. Infrastructures 2021, 6, 64.

6. Hainin, M.R.; Aziz, M.M.A.; Ali, Z.; Jaya, R.P.; El-Sergany, M.M.; Yaacob, H. Steel slag as a road construction material. Jurnal Teknologi 2015, 73.

7. Maharaj, C.; White, D.; Maharaj, R.; Morin, C. Re-use of steel slag as an aggregate to asphaltic road pavement surface. Cogent Engineering 2017, 4, 1416889.

8. Pasetto, M.; Baldo, N. Mix design and performance analysis of asphalt concretes with electric arc furnace slag. Construction and Building Materials 2011, 25, 3458-3468.

9. Sorlini, S.; Sanzeni, A.; Rondi, L. Reuse of steel slag in bituminous paving mixtures. Journal of hazardous materials 2012, 209, 84-91.

10. Yi, H.; Xu, G.; Cheng, H.; Wang, J.; Wan, Y.; Chen, H. An overview of utilization of steel slag. Procedia Environmental Sciences 2012, 16, 791-801.

11. Ziaee, S.A.; Behnia, K. Evaluating the effect of electric arc furnace steel slag on dynamic and static mechanical behavior of warm mix asphalt mixtures. J. Clean. Prod. 2020, 274.

12. Kong, D.; Chen, M.; Xie, J.; Zhao, M.; Yang, C. Geometric characteristics of BOF slag coarse aggregate and its influence on asphalt concrete. Mater. 2019, 12.

13. Cui, L.; Ling, T.; Zhang, Z.; Xin, J.; Li, R. Development of asphalt mixture density estimation model applicable to wide air void content range using ground penetrating radar. Construction and Building Materials 2021, 293, 123521.

14. Tarsi, G.; Tataranni, P.; Sangiorgi, C. The challenges of using reclaimed asphalt pavement for new asphalt mixtures: A review. Mater. 2020, 13, 4052.

15. Enieb, M.; Al-Jumaili, M.A.H.; Al-Jameel, H.A.E.; Eltwati, A. In Sustainability of using reclaimed asphalt pavement: based-reviewed evidence, Journal of Physics: Conference Series, 2021; IOP Publishing: p 012242.

16. Abdel-Jaber, M.t.; Al-shamayleh, R.A.; Ibrahim, R.; Alkhrissat, T.; Alqatamin, A. Mechanical properties evaluation of asphalt mixtures with variable contents of reclaimed asphalt pavement (RAP). Results in Engineering 2022, 14, 100463.

17. EAPA. Asphalt the 100% recyclable construction product EAPA. Position paper; European Asphalt Pavement Association: Brussels, Belgium, 2014; p 21.

18. Zaumanis, M.; Mallick, R.B.; Frank, R. 100% recycled hot mix asphalt: A review and analysis. Resources, Conservation and Recycling 2014, 92, 230-245.

19. Zaumanis, M.; Mallick, R.B.; Frank, R. 100% hot mix asphalt recycling: Challenges and benefits. Transportation Research Procedia 2016, 14, 3493-3502.

20. Infraestruturas de Portugal. aderno de Encargos Tipo Obra: 14.03-Pavimentação Caracteristicas dos materiais. vol. V; Almada, 2014.

21. Chomicz-Kowalska, A.; Gardziejczyk, W.; Iwański, M.M. Moisture resistance and compactibility of asphalt concrete produced in half-warm mix asphalt technology with foamed bitumen. Construction and Building Materials 2016, 126, 108-118.

## Claims

1. An asphalt concrete mixture comprising:

   50% to 65% (w/w) of steel slag aggregates, wherein the size of the steel slag aggregates is up to 20 mm, measured by sieving;
   15% to 30% (w/w) of reclaimed asphalt aggregates, wherein the size of the aggregates of reclaimed asphalt is up to 14 mm, measured by sieving;
   10% to 20% (w/w) of natural stone aggregates and/or filler;
   2% to 4% % (w/w) of virgin bitumen.

2. The asphalt concrete mixture according to the previous claim, wherein the mass ratio between steel slag aggregates and reclaimed asphalt aggregates ranges from 1.6:1 to 4.3:1; preferably 2.5:1 to 4:1.

3. The asphalt concrete mixture according to any of the previous claims, comprising: 50% to 65% (w/w) of steel slag aggregates; preferably 55 % to 60% (w/w) of steel slag aggregates.

4. The asphalt concrete mixture according to any of the previous claims wherein the size of the steel slag aggregates ranges from 4-16 mm; preferably 10-14 mm.

5. The asphalt concrete mixture according to any of the previous claims comprising 15-20 % (w/w) of reclaimed asphalt aggregates.

6. The asphalt concrete mixture according to any of the previous claims wherein the natural stone aggregates and/or filler are selected from: limestone, cement, lime, granite, basalt, or mixtures thereof.

7. The asphalt concrete mixture, according to any of the previous claims wherein the air void content ranges from 3-5 % (v/v); preferably the air void content ranges from 3.5 to 4.5% (v/v).

8. The asphalt concrete mixture according to any of the previous claims, wherein the size of the of reclaimed asphalt aggregates ranges from 4-10 mm.

9. The asphalt concrete mixture according to any of the previous claims, comprising 3.0% (w/w) to 3.5% (w/w) of virgin bitumen.

10. The asphalt concrete mixture according to any of the previous claims, comprising 3% (w/w) to 5% (w/w) of the filler.

11. The asphalt concrete mixture according to any of the previous claims comprising 11% (w/w) to 13% (w/w) of the natural stone aggregates.

12. The asphalt concrete mixture according to any of the previous claims wherein the natural stone aggregates are selected from limestone, granite, basalt, or mixtures thereof.

13. The asphalt concrete mixture according to any of the previous claims further comprising at least one additional additive selected from the group consisting of acids, polymers, anti-stripping agents, lime, gilsonite and fibers.

14. The asphalt concrete mixture according to any of the previous claims wherein up to 20% (w/w) of the steel slag aggregates have a size ranging from 14 mm to 20 mm; and 31% to 50% (w/w) of the steel slag aggregates have a size ranging from 4 mm to 14 mm; and 11% to 15% (w/w) of the steel slag aggregates have a size up to 4 mm.

15. An infrastructure comprising the asphalt concrete mixture according to any of the previous claims.

(a)

(b)

(c)

(d)

**Fig. 1**

1 cm

**Fig. 2**

1 cm

**Fig. 3**

**EUROPEAN SEARCH REPORT**

Application Number

EP 24 18 8447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RODRIGUEZ-FERNANDEZ I.: "Technical feasibility for the replacement of high rates of natural aggregates in asphalt mixtures", INT. J. PAVEMENT ENG., vol. 22, 1 January 2021 (2021-01-01), pages 940-949, XP093230738, | 1 | INV. C04B26/26 |
| A | * page 941 - page 947; examples mix 5, R1, R2 * | 2-15 | |
| A | CN 113 511 842 A (UNIV XIANGTAN) 19 October 2021 (2021-10-19) * claims 1,5 * | 1 | |
| A,D | MOURA C: "Viability of Using High Amounts of Steel Slag Aggregates to Improve the Circularity and Performance of Asphalt Mixtures", APPLIED SCIENCES, vol. 12, 1 January 2022 (2022-01-01), page 490, XP093230737, * abstract * * the whole document * | 1 | |
| A | CN 109 574 551 A (SHANGHAI SHISHEN IND & TRADE CO LTD) 5 April 2019 (2019-04-05) * claims 1,2 * | 1 | |
| A | CN 109 650 781 A (CHINA DESIGN GROUP CO LTD) 19 April 2019 (2019-04-19) * claims 1-5 * | 1 | |

TECHNICAL FIELDS SEARCHED (IPC)

C04B

The present search report has been drawn up for all claims

| Place of search | Date of completion of the search | Examiner |
|---|---|---|
| The Hague | 31 January 2025 | Kolb, Ulrike |

## ANNEX TO THE EUROPEAN SEARCH REPORT
## ON EUROPEAN PATENT APPLICATION NO.

EP 24 18 8447

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | | Publication date | Patent family member(s) | Publication date |
|---|---|---|---|---|
| CN 113511842 | A | 19-10-2021 | NONE | |
| CN 109574551 | A | 05-04-2019 | NONE | |
| CN 109650781 | A | 19-04-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104926233

- CN 113511842

**Non-patent literature cited in the description**

- **MOURA, C** ; **NASCIMENTO, L** ; **LOUREIRO, C** ; **RODRIGUES, M.** ; **OLIVEIRA, J** ; **SILVA, H**. Viability of Using High Amounts of Steel Slag Aggregates to Improve the Circularity and Performance of Asphalt Mixtures. *Applied Sciences*, 2022, vol. 12, 490
- **CHEN, Z** ; **LENG, Z** ; **JIAO, Y.** ; **XU, F** ; **LIN, J.** ; **WANG, H** ; **CAI, J** ; **ZHU, L** ; **ZHANG, Y** ; **FENG, N et al.** Innovative use of industrially produced steel slag powders in asphalt mixture to replace mineral fillers. *J. Clean. Prod*, 2022, vol. 344, 131124
- **SKAF, M** ; **MANSO, J.M** ; **ARAGÓN, Á** ; **FUENTE-ALONSO, J.A** ; **ORTEGA-LÓPEZ, V.** EAF slag in asphalt mixes: A brief review of its possible re-use.. *Resources, Conservation and Recycling*, 2017, vol. 120, 176-185
- **RODRÍGUEZ-FERNÁNDEZ, I** ; **LASTRA-GONZÁLEZ, P** ; **INDACOECHEA-VEGA, I.** ; **CASTRO-FRESNO, D**. Technical feasibility for the replacement of high rates of natural aggregates in asphalt mixtures. *Int. J. Pavement Eng.*, 2021, vol. 22, 940-949
- **REVILLA-CUESTA, V** ; **ORTEGA-LÓPEZ, V** ; **SKAF, M.** ; **PASQUINI, E** ; **PASETTO, M.** Preliminary Validation of Steel Slag-Aggregate Concrete for Rigid Pavements: A Full-Scale Study. *Infrastructures*, 2021, vol. 6, 64
- **HAININ, M.R** ; **AZIZ, M.M.A** ; **ALI, Z.** ; **JAYA, R.P.** ; **EI-SERGANY, M.M** ; **YAACOB, H.** Steel slag as a road construction material. *Jurnal Teknologi*, 2015, vol. 73
- **MAHARAJ, C** ; **WHITE, D** ; **MAHARAJ, R** ; **MORIN, C**. Re-use of steel slag as an aggregate to asphaltic road pavement surface.. *Cogent Engineering*, 2017, vol. 4, 1416889
- **PASETTO, M** ; **BALDO, N**. Mix design and performance analysis of asphalt concretes with electric arc furnace slag. *Construction and Building Materials*, 2011, vol. 25, 3458-3468
- **SORLINI, S** ; **SANZENI, A** ; **RONDI, L**. Reuse of steel slag in bituminous paving mixtures. *Journal of hazardous materials*, 2012, vol. 209, 84-91

- **YI, H** ; **XU, G** ; **CHENG, H.** ; **WANG, J** ; **WAN, Y** ; **CHEN, H.** An overview of utilization of steel slag. *Procedia Environmental Sciences*, 2012, vol. 16, 791-801
- **ZIAEE, S.A** ; **BEHNIA, K**. Evaluating the effect of electric arc furnace steel slag on dynamic and static mechanical behavior of warm mix asphalt mixtures. *J. Clean. Prod*, 2020, 274
- **KONG, D.** ; **CHEN, M** ; **XIE, J** ; **ZHAO, M** ; **YANG, C**. Geometric characteristics of BOF slag coarse aggregate and its influence on asphalt concrete. *Mater*, 2019, 12
- **CUI, L** ; **LING, T.** ; **ZHANG, Z.** ; **XIN, J** ; **LI, R**. Development of asphalt mixture density estimation model applicable to wide air void content range using ground penetrating radar.. *Construction and Building Materials*, 2021, vol. 293, 123521
- **TARSI, G** ; **TATARANNI, P.** ; **SANGIORGI, C**. The challenges of using reclaimed asphalt pavement for new asphalt mixtures: A review. *Mater*, 2020, vol. 13, 4052
- Sustainability of using reclaimed asphalt pavement: based-reviewed evidence. **ENIEB, M.** ; **AI-JUMAILI, M.A.H** ; **AL-JAMEEL, H.A.E** ; **ELTWATI, A**. Journal of Physics: Conference Series. IOP Publishing, 2021, 012242
- **ABDEL-JABER, M.T.** ; **AL-SHAMAYLEH, R.A.** ; **IBRAHIM, R.** ; **ALKHRISSAT, T** ; **ALQATAMIN, A**. Mechanical properties evaluation of asphalt mixtures with variable contents of reclaimed asphalt pavement (RAP). *Results in Engineering*, 2022, vol. 14, 100463
- EAPA. Asphalt the 100% recyclable construction product EAPA. Position paper. *European Asphalt Pavement Association: Brussels, Belgium*, 2014, 21
- **ZAUMANIS, M** ; **MALLICK, R.B.** ; **FRANK, R**. 100% recycled hot mix asphalt: A review and analysis. *Resources, Conservation and Recycling*, 2014, vol. 92, 230-245
- **ZAUMANIS, M** ; **MALLICK, R.B** ; **FRANK, R**. 100% hot mix asphalt recycling: Challenges and benefits. *Transportation Research Procedia*, 2016, vol. 14, 3493-3502

- **ALMADA**. Infraestruturas de Portugal. *derno de Encargos Tipo Obra: 14.03-Pavimentação Caracteristicas dos materiais*, 2014, vol. V

- **CHOMICZ-KOWALSKA, A.** ; **GARDZIEJCZYK, W** ; **IWAŃSKI, M.M**. Moisture resistance and compactibility of asphalt concrete produced in half-warm mix asphalt technology with foamed bitumen.. *Construction and Building Materials*, 2016, vol. 126, 108-118